# EUROPÄISCHE PATENTSCHRIFT

(11) **EP 1 604 803 B1**
(45) Veröffentlichungstag und Bekanntmachung des Hinweises auf die Patenterteilung: **06.09.2006**
(21) Anmeldenummer: 05010563.4
(22) Anmeldetag: 14.05.2005
(51) Int. Cl.: B29C 51/16, B29C 51/22

(54) **Vorrichtung zum Herstellen eines Bandes von etikettierten Behältern aus einer erwärmten thermoplastischen Kunststofffolie**
Apparatus for manufacturing a web of labelled containers from a heated thermoplastic film
Appareil pour fabriquer une bande de récipients étiquettés à partir d'un film thermoplastique chauffé

(30) Priorität: 08.06.2004 DE 102004027949
(43) Veröffentlichungstag der Anmeldung: 14.12.2005
(73) Patentinhaber: ILLIG Maschinenbau GmbH & Co. KG, 74081 Heilbronn (DE)
(72) Erfinder: Karolus, Andreas, 76646 Bruchsal (DE)

(56) Entgegenhaltungen:
- EP-A- 1 090 735
- DE-A1- 2 517 534
- DE-A1- 4 323 467
- DE-A1- 4 410 313
- DE-U1- 9 116 869
- US-A- 4 462 952
- PATENT ABSTRACTS OF JAPAN Bd. 1996, Nr. 09, 30. September 1996 (1996-09-30) & JP 08 132520 A (IDEMITSU PETROCHEM CO LTD; MATSUZAWA SEISAKUSHO:KK), 28. Mai 1996 (1996-05-28)

## Beschreibung

Die Erfindung betrifft eine Vorrichtung zum Herstellen eines Bandes von etikettierten Behältern aus einer erwärmten thermoplastischen Kunststofffolie nach der Gattung des Hauptanspruches.

Aus der EP 1 090 735 A2 ist eine Vorrichtung bekannt, bei der zwei Unterteile eines Formwerkzeuges mit einem Oberteil abwechselnd zusammenarbeiten. Während des Tiefziehens und Etikettierens der Behälter im einen Unterteil werden in das andere Unterteil Etiketten in die Formnester eingelegt. Beide Unterteile können separat axial und rechtwinklig dazu zwischen der Formstellung und je einer zugeordneten Einlegestationen für die Etiketten bewegt werden. Nachteilig bei dieser Ausführung ist es, dass das Zuführen des mit Etiketten beschickten Unterteils erst erfolgen kann, nachdem das andere Unterteil aus der Formstellung in die ihm zugeordnete Einlegestation überführt ist. Es sind folglich nach einem Tiefziehvorgang vier Bewegungen bis zum nächsten Tiefziehvorgang erforderlich: Erstes Unterteil absenken und seitlich verschieben - zweites Unterteil seitlich verschieben und anheben. Dies hat eine lange Taktzeit und damit eine geringe Taktzahl zur Folge und bedingt eine entsprechende Anzahl von Antrieben.

Aus der DE 41 24 994 A1 ist eine Vorrichtung bekannt, welche ein Oberteil eines Form/Stanzwerkzeuges aufweist, das mit einem axial zum Oberteil verschiebbaren und reversierend schwenkbaren Unterteil mit Formnestern zusammenarbeitet. Sauger nehmen Etiketten aus Magazinen ab und übergeben sie an ein Drehkreuz mit Armen. Das Drehkreuz führt die Etiketten dem Unterteil zu, entnimmt nach dem Form/Stanzprozess aus dem Unterteil die geformten, etikettierten und ausgestanzten Behälter und legt sie auf einem Förderband ab. Nachteilig dabei ist es, dass das Drehkreuz sowohl für das Entnehmen der etikettierten Becher als auch für das Einlegen der Etiketten vorgesehen ist. Es ist folglich nach dem Erreichen der Ausgangsposition des Unterteils der folgende Ablauf erforderlich: Horizontales Verschieben des Drehkreuzes in Richtung des Unterteils zum Einfahren der leeren Sauger in die Formnester, Übernahme der etikettierten Behälter mit den Saugern, horizontales Verschieben des Drehkreuzes vom Unterteil weg zum Ausfahren der Arme mit den Behältern an den Saugern, Drehen des Kreuzes um 90°, wiederholtes horizontales Verschieben des Drehkreuzes in Richtung des Unterteils zum Einfahren der Arme mit den Etiketten an den Saugern in das Unterteil, Ablösen und Übergeben der Etiketten von den Saugern an die Formnester, wiederholtes horizontales Verschieben des Drehkreuzes vom Unterteil weg zum Ausfahren der Arme mit den leeren Saugern aus den Formnestern. Dies hat eine lange Taktzeit und damit eine geringe Taktleistung zur Folge, da während des oben beschriebenen Ablaufes das Unterteil mit den Formnestern in seiner Ausgangsposition verharrt.

Aus der DE 25 17 534 A1 ist es bekannt, auf einem um eine Drehachse drehbaren Werkzeugträger mindestens drei Unterteile eines Formwerkzeuges anzuordnen, die mit einem Oberteil beim Tiefziehen und Etikettieren zusammenwirken. Der Werkzeugträger dreht in eine Richtung taktweise um einen entsprechenden Winkel und führt die Unterteile nacheinander einer Einlegestation für Etiketten, einer Form-/Stanzstation und einer Entnahmestation zu. Der Werkzeugträger selbst ist axial nicht verschiebbar, das Ausstanzen erfolgt durch eine Bewegung des Oberteils. Nachteilig dabei ist es, dass mindesten drei Unterteile erforderlich sind, wodurch die Werkzeugkosten insgesamt hoch sind. Auswerfereinrichtungen für die Behälter sind bei dieser Ausführung nicht möglich, wie sie insbesondere bei Behältern mit Hinterschnitt erforderlich oder zumindest vorteilhaft sind. Da die Behälter aus der Folienbahn nach dem Tiefziehen noch in der Formstation ausgestanzt werden, ist ihre Weiterverarbeitung durch Befüllen und Versiegeln mittels direkt nachgeschalteter Einrichtungen bei dieser bekannten Vorrichtung nicht möglich. Dies scheitert auch daran, dass der Werkzeugträger keine Axialverschiebung zum Oberteil durchführt, die zum Freigeben eines verformten Folienbandes mit noch damit verbundenen Behältern erforderlich ist.

Der Erfindung liegt die Aufgabe zugrunde, die Vorrichtung so auszubilden, dass die Werkzeugkosten gering sind und eine hohe Taktzahl erreicht wird. Es sollte ein Folienband mit noch damit verbundenen etikettierten Behältern gefertigt werden können, das direkt Nachfolgeeinrichtungen, z.B. zum Füllen, Versiegeln, Ausstanzen und Übergeben in Sammelpackungen zugeführt werden kann. Auswerfereinrichtungen für die Behälter sollten bei Bedarf eingebaut werden können.

Zur Lösung der Aufgabe werden die Merkmale des Anspruches 1 vorgeschlagen. Indem nur zwei Unterteile, um einen Winkel zwischen 90° und 120 °versetzt, auf dem Werkzeugträger angeordnet werden, sind die Werkzeugkosten relativ gering. Das Schwenken des Werkzeugträgers erfolgt reversierend um jeweils diesen Versatzwinkel und führt die Unterteile zu je einer zugeordneten Einlegestation für Etiketten, sodass während eines Tiefziehvorganges im einen Unterteil in das andere Unterteil Etiketten eingelegt werden können. Da der Werkzeugträger einen Hub größer als die Behälterhöhe ausführen kann wird es dadurch erreicht, dass das Band mit den damit verbundenen etikettierten Behältern frei wird für einen Vorschubschritt. Die Gestaltung der Vorrichtung ermöglicht den Einbau von Auswerfereinrichtungen für die geformten Behälter.
Weiterbildungen sind Merkmal der jeweiligen Unteransprüche. Die Ausführungsbeispiele der Erfindung sind anhand der schematischen Zeichnungen näher beschrieben. Es zeigen:
- Figur 1 bis 3: eine Seitenansicht der Vorrichtung in drei Stellungen während des Verfahrensablaufes.
- Figur 4: einen Querschnitt durch die Vorrichtung.

Die Vorrichtung ist Teil einer Gesamtanlage, bestehend aus einer vorgeschalteten Rollenaufnahme, von der eine thermoplastische Kunststofffolie 3 mittels einer Transporteinrichtung abgezogen und von einer Heizung erwärmt wird, und hat die Funktion einer Formstation. Diese Transporteinrichtung führt die Kunststofffolie 3 in Richtung des Pfeils 21 der Vorrichtung intermittierend zu und führt das Band 28 mit eingeformten etikettierten Behältern 2 zu Nachfolgeeinrichtungen, z.B. zum Füllen, Versiegeln, Ausstanzen und Übergeben in Sammelpackungen.

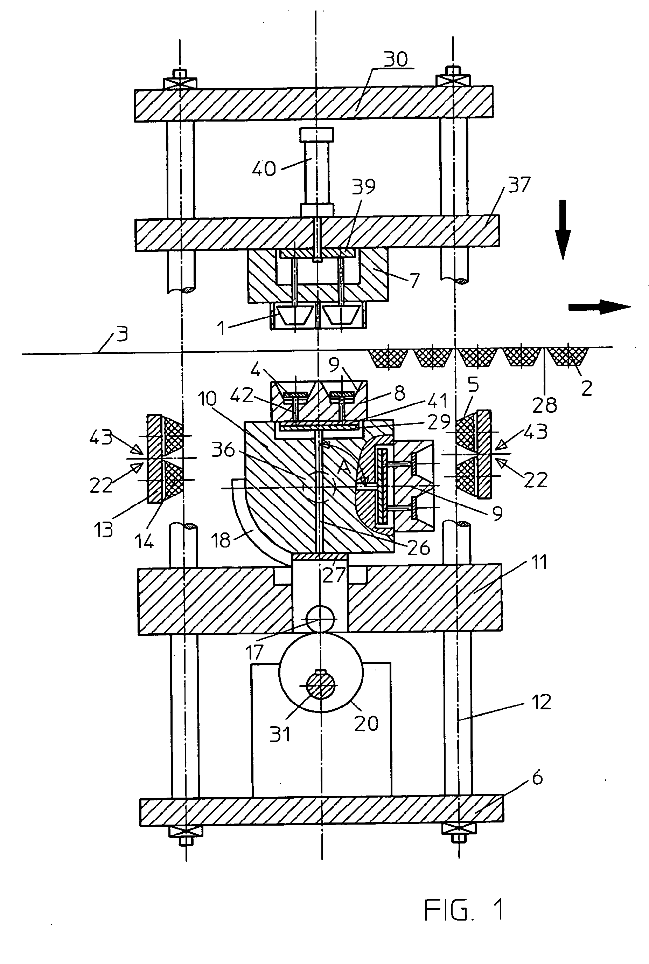

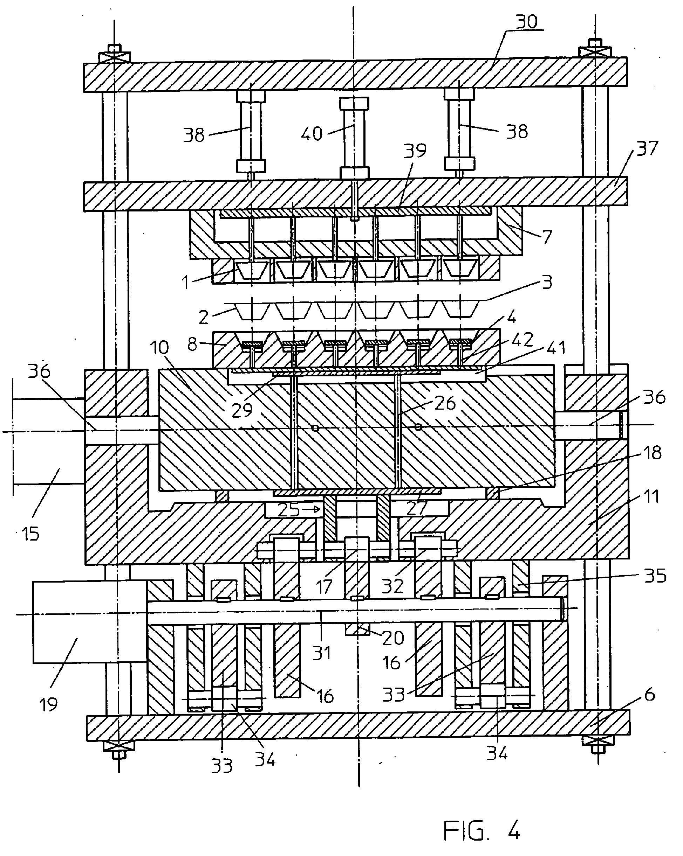

Die Vorrichtung besteht aus einer Grundplatte 6, einer Kopfplatte 30 und beide Platten 6, 30 verbindende Führungssäulen 12. An den Führungssäulen 12 ist eine Hubbrücke 11 verschiebbar geführt. Dabei erfolgt deren Verschiebung in Richtung der Kopfplatte 30 über zwei auf einer Querwelle 31 sitzenden Kurvenscheiben 16, die mit je einer Kurvenrolle 32 in Wirkverbindung stehen, die in der Hubbrücke 11 gelagert sind. In der Gegenrichtung erfolgt die Verschiebung über zwei Rückholkurven 33, die ebenfalls auf der Querwelle 31 sitzen und mit je einer Kurvenrolle 34 zusammenwirken, die mit der Hubbrücke 11 über Träger 35 verbunden ist. Angetrieben ist die Querwelle 31 von einem Antrieb 19, der motorisch, servomotorisch oder als Torque-Motor ausgebildet sein kann und entweder direkt mit der Querwelle 31 verbunden ist, wie in Figur 4 dargestellt, oder über einen zwischengeschalteten Riementrieb, Kettentrieb, Zahnradantrieb oder über ein Koppelgetriebe auf diese wirkt.
An der Hubbrücke 11 über Zapfen 36 drehbar gelagert sitzt ein Werkzeugträger 10, angetrieben über einen reversierbar gestalteten Antrieb. Dieser sitzt entweder in Form eines Direktantriebes 15, als Servomotor oder als Torque-Motor ausgebildet, auf dem einen Zapfen 36. Oder er wirkt auf diesen über einen zwischengeschalteten Riemenantrieb, einen Kettenantrieb, über Zahnräder oder über ein Koppelgetriebe. Der Werkzeugträger 10 trägt zwei Unterteile 8, 24 eines Formwerkzeuges, angeordnet zueinander unter einem Winkel A von vorzugsweise 90°, wie in den Figuren 1 bis 3 dargestellt, wobei dieser Winkel A aber auch bis zu 120° betragen könnte, wenn bestimmte Platzverhältnisse es erforderlich oder vorteilhaft erscheinen lassen. Jedes Unterteil 8, 24 weist mindestens ein, meist mehrere Formnester 9 ein- oder mehrreihig auf, entsprechend der Form der herzustellenden Behälter 2. Beide Unterteile 8, 24 wirken mit einem Oberteil 7 zusammen, das an der Halteplatte 37 befestigt ist, die vorzugsweise axial verschiebbar auf den Führungssäulen 12 sitzt. Hierzu dient ein Antrieb 38, dargestellt als zwei Pneumatikzylinder, die sich an der Kopfplatte 30 abstützen. Andere Antriebe wie Kniehebelantriebe, hydraulische Antriebe, Exzenterantriebe, Kurvenantriebe, Spindelantriebe sind ebenfalls möglich, wobei der Antrieb 38 mit dem Antrieb 19 für die Hubbrücke 11 mechanisch oder elektrisch gekoppelt sein kann. Falls die Gestalt der Behälter 2 den Einsatz eines Streckhelfers 1 erforderlich macht sitzt an der Halteplatte 37 ein Antrieb 40 für die Trägerplatte 39, mit der alle Streckhelfer 1 verbunden sind.

Falls zum Entformen der Behälter 2 ein verschiebbarer Formboden 4 pro Formnest 9 vorteilhaft ist kann dieser, wie in den Figuren 1 bis 3 dargestellt, gestaltet werden. Alle Formböden 4 sitzen über Stangen 42 an einem Quersteg 41, der beim Einbau eines Unterteils 8, 24 über eine nicht dargestellte Nutverbindung mit der Platte 29 gekoppelt wird. Sie ist über Stangen 26 in der Hubbrücke 11 geführt, die Stangen 26 stützen sich auf einer Traverse 27 ab. An der Traverse 27 ist eine Kurvenrolle 17 drehbar gelagert, die auf der Kurvenscheibe 20 läuft. Diese Kurvenscheibe 20 ist mit der Querwelle 31 verbunden. Auf diese Weise kann eine Anhebung der Formböden 4 erfolgen.
Die Platte 29 und die Stangen 26 sind doppelt vorhanden und je einem Unterteil 8, 24 zugeordnet. Beim Schwenken des Werkzeugträgers 10 kommen die Stangen 26 abwechselnd auf der Traverse 27 zur Anlage und werden so über die Kurvenscheibe 20 bewegt. Wahlweise können auch die Traverse 27 und die Kurvenrolle 17 bei entsprechender Gestaltung und Aussparung der Hubbrücke 11 ebenfalls doppelt vorhanden sein, sodass die dann vorhandenen beiden Kurvenrollen 17 abwechselnd auf der Kurvenscheibe 20 zu liegen kommen.
Die Rückholung der Formböden 4 erfolgt dabei entweder über nicht dargestellte Federn, einen eigenen Antrieb, z.B. in Form eines Pneumatikzylinders, oder über eine Rückholkurve.
In besonderer Ausbildung der Vorrichtung wird vorgeschlagen, am Werkzeugträger 10 eine Stützeinrichtung vorzusehen, die beim Tiefziehen die durch die Formluftzufuhr entstehende Kraft vom Werkzeugträger 10 auf die Hubbrücke 11 überträgt und die Durchbiegung des Werkzeugträgers 10 verringert. Eine solche Stützeinrichtung ist in Form einer halbkreisförmig gestalteten Stützkurve 18 beispielhaft dargestellt. Auch Stützrollen sind möglich.
Eine weitere Antriebsvariante zum Anheben der Hubbrücke 11 und damit des Werkzeugträgers 10 kann über einen an sich bekannten Kniehebelantrieb, vorzugsweise über Kugelrollspindel oder Kurbeltrieb angetrieben, erfolgen, der eine hohe Schließkraft ermöglicht. Solcher Antrieb sind beispielsweise in der DE 36 04 255 C2 und der DE 34 36 469 beschrieben. Auch ein direkt in Axialrichtung wirkender Kugelgewindetrieb oder ein Zahnstangenantrieb, motorisch oder servomotorisch angetrieben, ist einsetzbar und bietet Vorteile bezüglich des Einbauraumes und der Wiederholgenauigkeit.

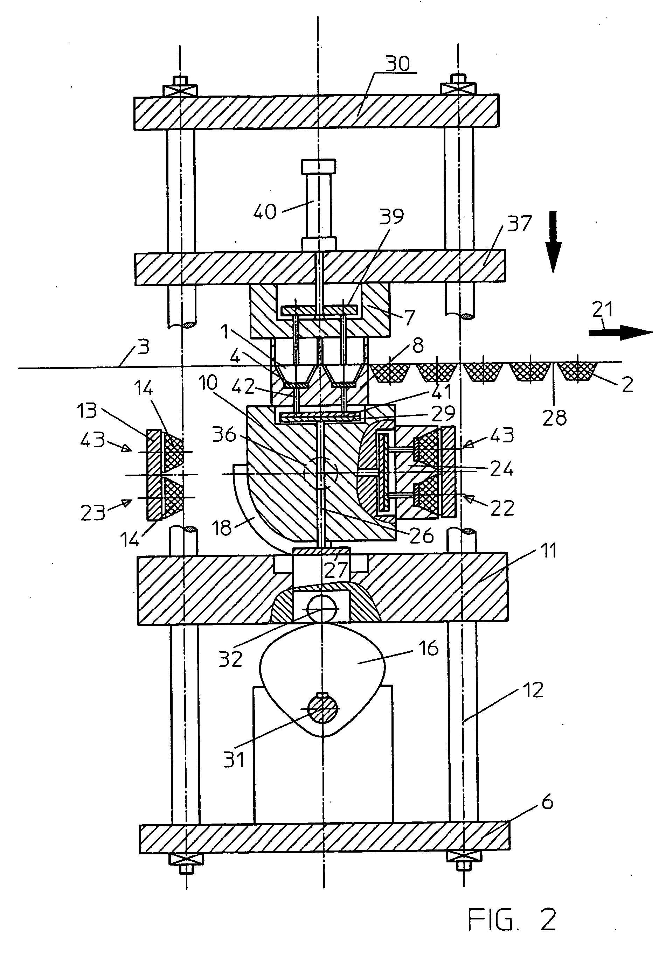

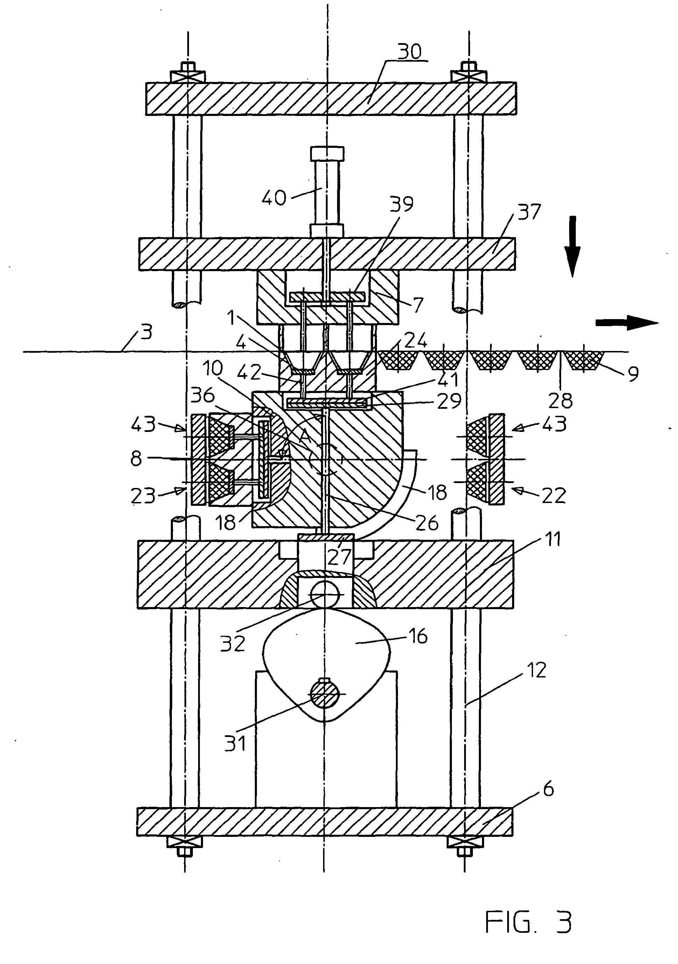

Der Verfahrensablauf ist wie folgt:
Nach dem Eintransport eines Abschnitts der erwärmten Kunststofffolie 3 in die Vorrichtung (Lage Figur 1) wird der Werkzeugträger 10 angehoben und das Oberteil 7 ggf. abgesenkt, sodass jetzt durch Tiefziehen mittels Differenzdruck und ggf. Einsatz der Streckhelfer 1 im einen Unterteil 8 in bekannter Weise die Behälter 2 verformt und dabei das zuvor pro Formnest 9 eingelegte Etikett 5 mit dem Behälter 2 verbunden wird. Während des Tiefziehens wird in das andere, sich in seiner zugeordneten Einlegestation 22 befindliche Unterteil 24 je ein Etikett 5 pro Formnest 9 mittels einer an sich bekannten Etiketten-Zufuhreinrichtung 43 eingelegt (Lage Fig. 2). Sie besteht jeweils aus einer Trägerplatte 13 und Aufnahmedornen 14, die an Unterdruck angeschlossen werden können und die die Etiketten 5 von einem Stapel oder Etikettenband aus in die Formnester 9 überführen. Die Formnester 9 können mit Unterdruck verbunden werden und saugen die Etiketten 5 an die Wandung an. Das Festhalten der Etiketten 5 auf den Aufnahmedornen 14 und/oder an den Formnestern 9 kann auch durch Aufbau einer elektrostatischen Aufladung erfolgen.
Über die Antriebe 15, 19 erfolgt das Abwärtsfahren des Werkzeugträgers 10 und sein Schwenken um den Winkel A, sodass das andere Unterteil 24 durch Anheben des Werkzeugträgers 10 in Formstellung gebracht werden kann. Gleichzeitig kommt das Unterteil 8 in seiner Einlegestation 23 zu liegen und hier erfolgt in gleicher Weise das Einlegen von Etiketten 5 in jedes Formnest 9 (Lage Fig. 3).
Falls in der Vorrichtung eine Auswerfereinrichtung 25 für die Behälter 2 vorgesehen ist, wird diese so gesteuert, dass bei der Abwärtsbewegung des Werkzeugträgers 10 zunächst die Formböden 4 stehen bleiben, bis dessen Hub ganz oder teilweise beendet ist. Dann erfolgt der Rückzug der Formböden 4, sodass sie beim Einlegen der Etiketten 5 zurückgezogen sind und dieses nicht behindern.

## Patentansprüche

1. Vorrichtung zum Herstellen eines Bandes (28) von etikettierten Behältern (2) aus einer erwärmten thermoplastischen Kunststofffolie (3) durch Tiefziehen mittels eines Formwerkzeuges, bestehend aus einem an einer Halteplatte (37) befestigten Oberteil (7) und zwei, die Formnester (9) der herzustellenden Behälter (2) aufweisenden Unterteilen (8, 24), **dadurch gekennzeichnet, dass** diese Unterteilen (8, 24) unter einem Winkel (A) zwischen 90°-120° auf einem reversierend um diesen Winkel (A) ausgebildeten Werkzeugträger (10) angeordnet sind, wobei dieser relativ zum Oberteil (7) verschiebbar ist, sowie aus zwei Einlegestationen (22, 23), die so angeordnet sind, dass während des Formens von Behältern (2) mittels des einen Unterteils (8, 24) das Einlegen von Etiketten (5) in das andere Unterteil (8, 24) erfolgen kann.

2. Vorrichtung nach Anspruch 1, **dadurch gekennzeichnet, dass** das Oberteil (7) axial verschiebbar zum Werkzeugträger (10) ausgebildet ist.

3. Vorrichtung nach Anspruch 1 oder 2, **dadurch gekennzeichnet, dass** der Antrieb zum axialen Verschieben des Werkzeugträgers (10) über Kurvenscheiben (16, 33) und an der Hubbrücke (11) gelagerte Kurvenrollen (32, 34) erfolgt, wobei die die Kurvenscheiben (16) tragende Querwelle (31) von einem Antrieb (19), der als Motor, Servomotor oder Torque-Motor ausgebildet ist, direkt oder über einen zwischengeschalteten Riementrieb, Kettentrieb, Zahnradantrieb oder über ein Koppelgetriebe angetrieben wird.

4. Vorrichtung nach Anspruch 1 oder 2, **dadurch gekennzeichnet, dass** der Antrieb zum axialen Verschieben des Werkzeugträgers (10) als axial wirkender Kugelgewindetrieb oder Zahnstangenantrieb ausgebildet ist, der motorisch oder servomotorisch angetrieben ist.

5. Vorrichtung nach Anspruch 1 oder 2, **dadurch gekennzeichnet, dass** der Antrieb zum axialen Verschieben des Werkzeugträgers (10) als Kniehebelantrieb ausgebildet ist, der durch einen Kurbeltrieb oder eine Kugelrollspindel betätigt wird und der motorisch oder servomotorisch angetrieben ist.

6. Vorrichtung nach einem der Ansprüche 1 bis 5, **dadurch gekennzeichnet, dass** zum Schwenken des Werkzeugträgers (10) ein Direktantrieb (15) auf der Schwenkachse sitzt, der als Torque-Motor oder als Servomotor ausgebildet ist.

7. Vorrichtung nach einem der Ansprüche 1 bis 5, **dadurch gekennzeichnet, dass** das Schwenken des Werkzeugträgers (10) über einen auf einen Zapfen (36) wirkenden Riementrieb oder Kettentrieb erfolgt, der über einen Motor oder Servomotor angetrieben wird.

8. Vorrichtung nach einem der Ansprüche 1 bis 5, **dadurch gekennzeichnet, dass** das Schwenken des Werkzeugträgers (10) über einen auf einen Zapfen (36) wirkenden Zahnradantrieb erfolgt, der über einen Motor oder Servomotor angetrieben wird.

9. Vorrichtung nach einem der Ansprüche 1 bis 5, **dadurch gekennzeichnet, dass** das Schwenken des Werkzeugträgers (10) über ein Koppelgetriebe erfolgt, das an einem Zapfen (36) angelenkt ist.

10. Vorrichtung nach einem der Ansprüche 1 bis 9, **gekennzeichnet durch** eine Auswerfereinrichtung (25) für die geformten Behälter (2), die mit dem jeweils in Formstellung stehenden Unterteil (8, 24) in Wirkverbindung gebracht werden kann.

11. Vorrichtung nach Anspruch 10, **dadurch gekennzeichnet, dass** die Auswerfereinrichtung (25) aus einer auf der Querwelle (31) sitzenden Kurvenscheibe (20) besteht, die über eine Traverse (27) eine an Stangen (26) geführte Platte (29) verschiebt, mit der der alle Formböden (4) tragende Quersteg (41) gekoppelt ist, wobei pro Unterteil (8, 24) mindestens eine Platte (29) mit Stangen (26) vorhanden ist.

12. Vorrichtung nach Anspruch 11, **dadurch gekennzeichnet, dass** pro Unterteil (8, 24) je eine Traverse (27) vorhanden ist.

13. Vorrichtung nach einem der Ansprüche 1 bis 12, **dadurch gekennzeichnet, dass** in der Formstellung eine Stützeinrichtung zwischen Werkzeugträger (10) und Hubbrücke (11) zum Verhindem des Durchbiegens wirksam wird.

14. Vorrichtung nach Anspruch 13, **dadurch gekennzeichnet, dass** als Stützeinrichtung eine Stützkurve (18) oder eine Stützrolle vorgesehen ist.

## Claims

1. A device for manufacturing a strip (28) of labelled containers (2) made from a heated thermoplastic plastic film (3) by deep-drawing using a moulding tool, including an upper part (7) attached to a retaining plate (37), and two lower parts (8, 24) having the mould cavities (9) of the containers to be produced (2), **characterised in that** these lower parts (8, 24) are arranged at an angle (A) between 90°-120° on a die carrier (10) that is conformed so as to oscillate through this angle (A), wherein it is displaceable relative to the upper part (7), and from two insertion stations (22, 23), which are positioned in such a way that while the containers (2) are being moulded by the one lower part (8, 24), the labels (5) may be inserted in the other lower part (8, 24).

2. The device in accordance with claim 1, **characterised in that** the upper part (7) is formed in such a way that it is axially displaceable to the die carrier (10).

3. The device in accordance with claim 1 or 2, **characterised in that** the drive for axial displacement of the die carrier (10) occurs via cam discs (16, 33) and cam rollers (32, 34) supported on at the vertical stroke bridge (11), wherein a transverse shaft (31) supporting the cam discs (16) is driven directly or via an interposed belt drive, chain drive, gearwheel drive or a linkage by a drive (19) that has the form of a motor, a servo motor or a torque motor.

4. The device in accordance with claim 1 or 2, **characterised in that** the drive for axial displacement of the die carrier (10) has the form of an axially operating ball screw or rack and pinion drive, which is powered by a motor or servo motor.

5. The device in accordance with claim 1 or 2, **characterised in that** the drive for axial displacement of the die carrier (10) has the form of a toggle lever drive, which is activated by a crank mechanism or a ball bearing screw and is powered by a motor or servo motor.

6. The device in accordance with any of claims 1 to 5, **characterised in that** a gearless drive (15) which has the form of a torque motor or servo motor rests on the axis of rotation to swivel the die carrier (10).

7. The device in accordance with any of claims 1 to 5, **characterised in that** the die carrier (10) is swivelled via a belt drive or chain drive operating on a journal (36), and which is powered by a motor or servo motor.

8. The device in accordance with any of claims 1 to 5, **characterised in that** the die carrier (10) is swivelled via a gear drive operating on a journal (36), and which is powered by a motor or servo motor.

9. The device in accordance with any of claims 1 to 5, **characterised in that** the die carrier (10) is swivelled via a linkage, which is linked to a journal (36).

10. The device in accordance with any of claims 1 to 9, **characterised by** an ejecting device (25) for the moulded containers (2), which can be brought into operating connection with the respective lower part (8, 24) in moulding position.

11. The device in accordance with claim 10, **characterised in that** the ejecting device (25) includes a cam disc (20) supported on the transverse shaft (31), which acts via a cross-beam (27) to move a plate (29) that is guided on rods (26), and with which the cross web (41) supporting all the moulding trays (4) is coupled, wherein at least one plate (29) with rods (26) is present for each lower part (8, 24).

12. The device in accordance with claim 11, **characterised in that** one cross-beam (27) is present for each lower part (8, 24).

13. The device in accordance with any of claims 1 to 12, **characterised in that** a supporting device between the die carrier (10) and the vertical lift (11) in the moulding position takes effect to prevent bending.

14. The device in accordance with claim 13, **characterised in that** a cam plate (18) or supporting roller is provided as a supporting mechanism.

## Revendications

1. Dispositif de fabrication d'une bande (28) de récipients étiquetés (2) à partir d'un film en matière thermoplastique chauffée (3) par emboutissage au moyen d'un outil de moulage, composé d'une pièce supérieure (7) fixée à une plaque de retenue (37) et de deux pièces inférieures (8, 24) présentant les cavités de moulage (9) des récipients à fabriquer (2), **caractérisé en ce que** ces pièces inférieures (8, 24) sont disposées suivant un angle (A) allant de 90° à 120° sur un porte-outil (10) constitué de manière inversée autour de cet angle (A), ce dernier pouvant être décalé par rapport à la pièce supérieure (7), ainsi que de deux postes de pose (22, 23) qui sont disposés de manière à ce que, pendant le moulage de récipients (2) au moyen de la pièce inférieure (8, 24), la pose des étiquettes (5) dans l'autre pièce inférieure (8, 24) puisse être effectuée.

2. Dispositif selon la revendication 1, **caractérisé en ce que** la pièce supérieure (7) est réalisée de manière à pouvoir être décalée axialement par rapport au porte-outil (10).

3. Dispositif selon la revendication 1 ou 2, **caractérisé en ce que** la commande pour le décalage axial du porte-outil (10) est effectuée au moyen de disques à cames (16, 33) et de rouleaux à cames (32, 34) s'appuyant sur le pont élévateur (11), tandis que l'arbre de transmission transversal (31) supportant les disques à cames (16) est entraîné directement ou par l'intermédiaire d'une transmission à courroie, d'une transmission à chaîne, d'une transmission à roues dentées ou d'une transmission à manivelle par une commande (19) qui est réalisée sous forme d'un moteur, d'un servomoteur ou d'un moteur couple.

4. Dispositif selon la revendication 1 ou 2, **caractérisé en ce que** la commande pour le décalage axial du porte-outil (10) est réalisée sous forme d'une transmission à vis à billes ou d'une transmission à crémaillère agissant axialement et qui est entraînée par moteur ou servomoteur.

5. Dispositif selon la revendication 1 ou 2, **caractérisé en ce que** la commande pour le décalage axial du porte-outil (10) est réalisée sous forme d'une commande à genouillère qui est actionnée par une transmission à manivelle ou une transmission à vis à billes et qui est entraînée par moteur ou servomoteur.

6. Dispositif selon une des revendications 1 à 5, **caractérisé en ce que**, pour faire pivoter le porte-outil (10), une commande directe (15) est assise sur l'axe de pivotement, cette commande étant réalisée sous forme de moteur couple ou de servomoteur.

7. Dispositif selon une des revendications 1 à 5, **caractérisé en ce que** le pivotement du porte-outil (10) est assuré au moyen d'une transmission à courroie ou d'une transmission à chaîne agissant sur un tourillon (36) et qui est entraînée par un moteur ou un servomoteur.

8. Dispositif selon une des revendications 1 à 5, **caractérisé en ce que** le pivotement du porte-outil (10) est assuré au moyen d'une transmission à roues dentées agissant sur un tourillon (36) et qui est entraînée par un moteur ou un servomoteur.

9. Dispositif selon une des revendications 1 à 5, **caractérisé en ce que** le pivotement du porte-outil (10) est assuré au moyen d'une transmission à manivelle qui est articulée à un tourillon (36).

10. Dispositif selon une des revendications 1 à 9, **caractérisé par** un dispositif d'éjection (25) pour les récipients moulés (2), qui peut être mis en interaction avec la pièce inférieure (8, 24) se trouvant respectivement en position de moulage.

11. Dispositif selon la revendication 10, **caractérisé en ce que** le dispositif d'éjection (25) est composé d'un disque à came (20) reposant sur l'arbre de transmission transversal (31) et qui, par l'intermédiaire d'une traverse (27), décale une plaque (29) guidée sur des barres (26) à laquelle la barre transversale (41) supportant tous les fonds de moules (4) est couplée, sachant qu'il est prévu par pièce inférieure (8, 24) au moins une plaque (29) avec des barres (26).

12. Dispositif selon la revendication 11, **caractérisé en ce qu'**il est prévu par pièce inférieure (8, 24) respectivement une traverse (27).

13. Dispositif selon une des revendications 1 à 12, **caractérisé en ce qu'**en position de moulage, un dispositif de soutien est activé entre le porte-outil (10) et le pont élévateur (11) pour empêcher le fléchissement.

14. Dispositif selon la revendication 13, **caractérisé en ce qu'**il est prévu comme dispositif de soutien une came de soutien (18) ou un rouleau de soutien.
